# EUROPEAN PATENT APPLICATION

(11) **EP 0 897 686 A1**
(43) Date of publication of application: **24.02.1999**
(21) Application number: 98306693.7
(22) Date of filing: 14.08.1998
(51) Int. Cl.: A47J 27/21

(54) **Filter kettle**

(30) Priority: 14.08.1997 GB 9717115
(71) Applicant: Woodfield Enterprises Limited, Douglas, Isle of Man IM1 2AZ (GB)
(72) Inventor: Walker, David MacAlistair, Loughborough, Leicestershire LE12 8NB (GB)
(74) Representative: Marshall, John Grahame

(57) **Abstract**

A filter kettle (1) has a cold water reservoir (2) for storing unfiltered tap water. Pump means (8) are provided for pumping the cold water from the cold water reservoir through a filter element (12) into a hot water chamber (3) where the water can be heated and boiled. The filter element (12) is located either in a handle (13) of the kettle or in the cold water reservoir immediately adjacent a vertical rear wall (14) of the kettle. In this way the filter element (12) can be thermally isolated from the damaging effect of the hot water in the hot water chamber (3), while remaining easily accessible for the periodic changing of the filter elements.

## Description

### DESCRIPTION

### Field of the Invention

This invention relates to electric kettles for boiling filtered water for domestic consumption.

### Background Art

My own Patent Application GB-A-2294631 discloses a filter kettle having a cold water reservoir and a hot water chamber. Water is filled initially into the cold water reservoir, and pump means are provided for pumping on demand cold water from that cold water reservoir through a filter into the hot water chamber. The kettle design is such that the cold water reservoir surrounds the hot water chamber so as to provide thermal insulation for the user who might otherwise touch a hot outer surface of the kettle. Also the location of the filter in an arcuate zone immediately beneath the cold water reservoir effectively uses that cold water reservoir as a thermally insulating barrier between the hot water chamber and the filter. Filter efficiency is very seriously degraded by higher temperatures, so that this particular design is considered to be highly advantageous.

To change the filter in a kettle according to GB-A-2294631 is necessary to empty all of the water from the kettle and invert the kettle to obtain access to the filter from the base of the kettle. This is undesirable, and it is an object of this invention to provide a filter kettle which retains the advantages of GB-A-2294631 while permitting changing of the filter while the kettle is in an upright position and possibly filled with water.

### The Invention

The invention is based on the realization that in a filter kettle having compartments for hot and cold water, the optimum location for the filter is one vertically aligned with an outer wall of the kettle on the handle side of the kettle. Accordingly the invention provides a filter kettle comprising a cold water reservoir and a hot water chamber that is provided with an electrical heating element; means for filling the cold water reservoir with cold water; a filter element; and pump means for pumping on demand cold water from the cold water reservoir through the filter element into the hot water chamber; wherein the filter element is located within or adjacent to a handle of the kettle, parallel to a rear outside wall of the kettle.

Preferably the filter element is housed within the handle, with access being available through an access opening in the top of the handle. The access opening in the handle may be provided with a removable cover, and to change the filter all that is necessary is to remove the cover and lift the old filter vertically out from within the handle before inserting a new filter via the same route.

The filter must have a water inlet and a water outlet, so that water from the cold water reservoir can be pumped through the filter from the inlet to the outlet. Means must also be provided for transporting the pumped water from the filter outlet into the hot water chamber of the kettle. If desired, the inlet may be provided at the bottom of the vertically arranged filter, and the outlet at the top so that the water simply has to be pumped upwardly in a relatively straight path through the filter. Preferably, however, the water inlet and outlet are both provided at or near the top of the filter which would then define a generally U-shaped passage for the pumped water, from the inlet at the top down to the base of the filter and back to the outlet at the top. One advantage of this latter design is that the pumped water has a longer passage through the filter medium. Another advantage is that when the filter is being changed, when it is lifted out from the handle it carries with it any internal water that has collected in there prior to or during the pumping process. If the inlet orifice were at the bottom, then any water contained within the filter at the time of filter changing would simply run out as the filter was removed from the handle, and possibly spill over the electrical connections in the power base unit for the kettle.

Provision of the filter in the kettle handle provides an excellent thermal barrier between the hot water chamber and the filter element, and represents a marked increase in filter efficiency over even the design disclosed in GB-A-2294631. Another extremely efficient means of maintaining thermal stability of the filter and protecting it from the influence of the hot water in the hot water chamber would be to have a vertical partition down the centre of the kettle dividing it into a hot water chamber on the spout side, and a cold water reservoir on the handle side. The filter could then be positioned either within the handle as described above or in a sealed compartment within the cold water reservoir, immediately adjacent the rear wall of the kettle. Removal of the filter from such a sealed chamber could be effected by removing the kettle lid, removing a cover over the top of the sealed chamber and withdrawing the filter vertically from that chamber.

The pump for pumping the cold water on demand from the cold water reservoir through the filter into the hot water chamber may conveniently be housed in the base of the kettle handle. That pump may be a small impeller blade driven by a lightweight electric motor within the handle, and powered from a power supply in a base unit for a so-called cordless electric kettle. The motor need be only lightweight, and does not add very significantly to the weight of the kettle. Where weight considerations are of importance, however, the actual motor for driving the impeller can be located in the base unit itself, with a drive shaft extending from that base unit for interaction via a splined connection to an impeller drive shaft extending downwardly near the base of the kettle. Thus when the kettle is placed on the base unit, the drive shaft and impeller shaft are brought into cooperating engagement, and actuation of the motor within the base unit is effective to cause the cold water to be pumped through the filter.

As in GB-A-2294631 the pump is preferably actuable by means of a push button, and designed to be operative for as long as that push button is depressed. The push button may be provided on the kettle handle or on the base unit. It is not necessary for the pump to be capable of sensing a dry running condition, although preferably the user will be able to hear a change in the sound of the pump as it transfers the last the water from the cold water reservoir through the filter to the hot water chamber, so that the user can at that stage release the push-button and thus stop the pump.

By moving the filter to a vertical position at the rear of the kettle, considerable flexibility of design is achieved in relation to the disposition of the cold water reservoir and the hot water chamber. The cold water reservoir can be formed surrounding the hot water chamber as in GB-A-2294631, but the two chambers may alternatively be arranged side by side or one above the other. All that is necessary is to ensure that the user is able to fill the kettle from a cold water tap with the tap water going selectively into the cold water chamber; and that when the water is poured from the kettle it passes through the kettle spout from exclusively the hot water chamber.

### Drawings

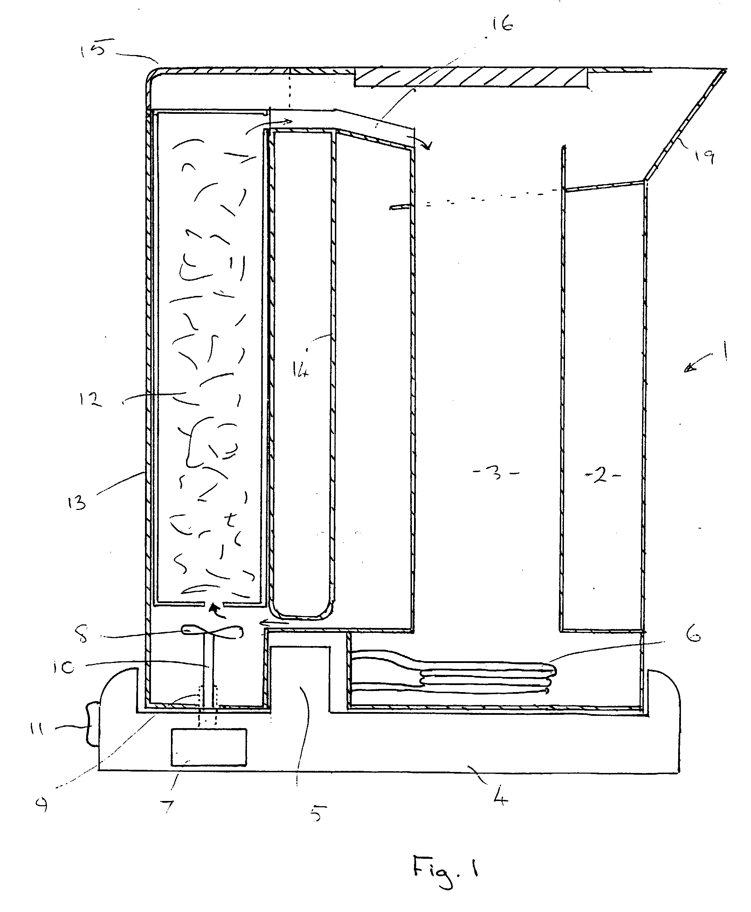

Figures 1 to 5 are schematic vertical sections through five different embodiments of filter kettles according to the invention;

Referring first to Figure 1, there is shown a kettle 1 which is a jug filter kettle having a cold water reservoir 2 surrounding a hot water chamber 3 in substantially the same geometry as that of GB-A-22964631. The kettle is of cordless design and sits on a base unit 4 which provides the electrical power source. Electrical connectors 5 extending from the base unit 4 make electrical connection with cooperating connectors in the kettle when the kettle is placed on the base unit 4, to provide power to the heating element 6. The kettle is provided with conventional sensors and cut outs (not shown) to ensure that the power supply is interrupted when water boils or when the heating element overheats because the hot water chamber is empty.

In Figure 1, a motor 7 for driving an impeller 8 of the pump is housed in the base unit 4. A drive shaft 9 extends vertically from the base unit 4, and transmits its drive to an impeller shaft 10 when the kettle is placed on the base unit 4 and a push button 11 for the motor is depressed.

A filter unit 12 is located in the handle 13 of the kettle 1, where it assumes a vertical position parallel with the rear wall 14 of the jug kettle. To remove the filter unit 12, a small access hatch 15 at the top of the handle is opened, and the old filter unit 12 is lifted out vertically. If desired, a spring (not shown) may be provided to elevate the filter unit 12 to a position in which it protrudes out of the handle for easy access when the access hatch 15 is opened.

As illustrated in Figure 1 by a series of unreferenced arrows, the path for pumped water through the filter is upwardly through an inlet orifice in the base of the filter unit 12 to an outlet orifice at the top end of the filter unit. From there, the filtered water passes along a channel or conduit 16, to spill into the hot water chamber 3. An alternative design (not illustrated) would be to have both the intake and discharge orifices of the filter unit 12 at the top of the filter unit, and to establish a route for the pumped water from the impeller 8 up to the inlet orifice at the top of the handle, through a generally U-shaped passage through the filter unit 12, and out from the discharge orifice into the channel or conduit 16.

Preferably sight glasses (not illustrated) are provided in the kettle outer wall for displaying from the outside of the kettle the water levels in each of the hot and cold water chambers.

In the description of the subsequent Figures of the drawings, the same reference numerals will be used to denote parts and components which are similar to those of Figure 1.

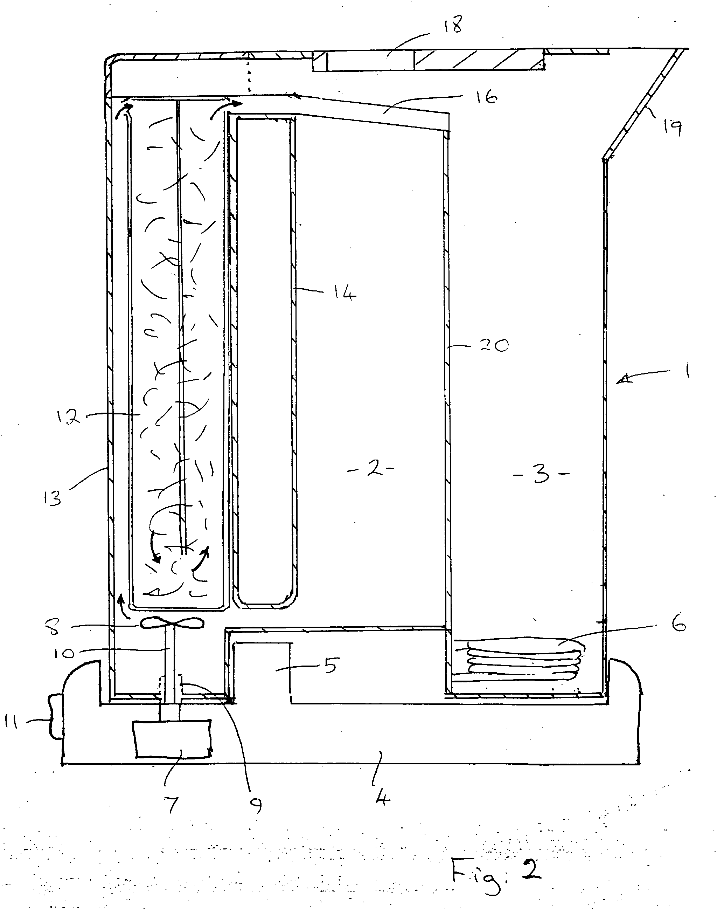

In Figure 2, the hot and cold water chambers 3 and 2 are arranged side by side, separated by a vertical partition 20 within the jug kettle 1. The intake and discharge orifices of the filter unit 12 are both at the top, and there is shown by a series of un referenced arrows a schematic illustration of the water path for pumped water from the impeller 8 to the intake orifice of the filter, and from the discharge orifice to the conduit 16 and thence to the hot water chamber 3.

In the jug kettle of Figure 2 a dedicated fill aperture 18 is provided in a kettle lid, and preferably the spout is sized and shaped such as to make it difficult or impossible to fill the kettle through the spout which would deliver unfiltered cold water directly into the hot water chamber.

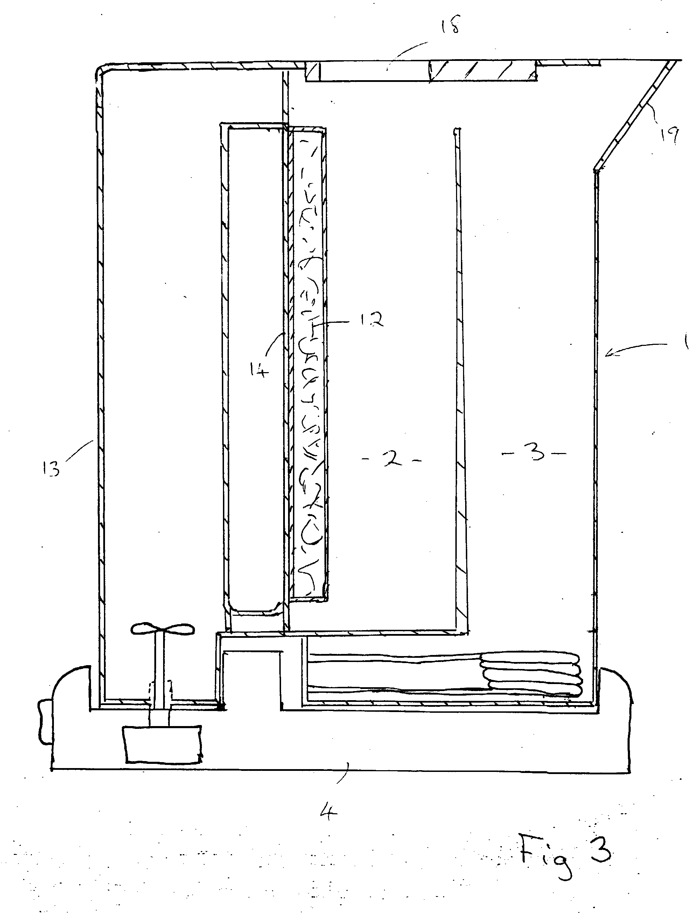

Figure 3 illustrates a kettle which is in all respects similar to that of Fiqure 2 except that the filter unit 12 is provided in the cold water reservoir 2, immediately adjacent the rear wall 14.

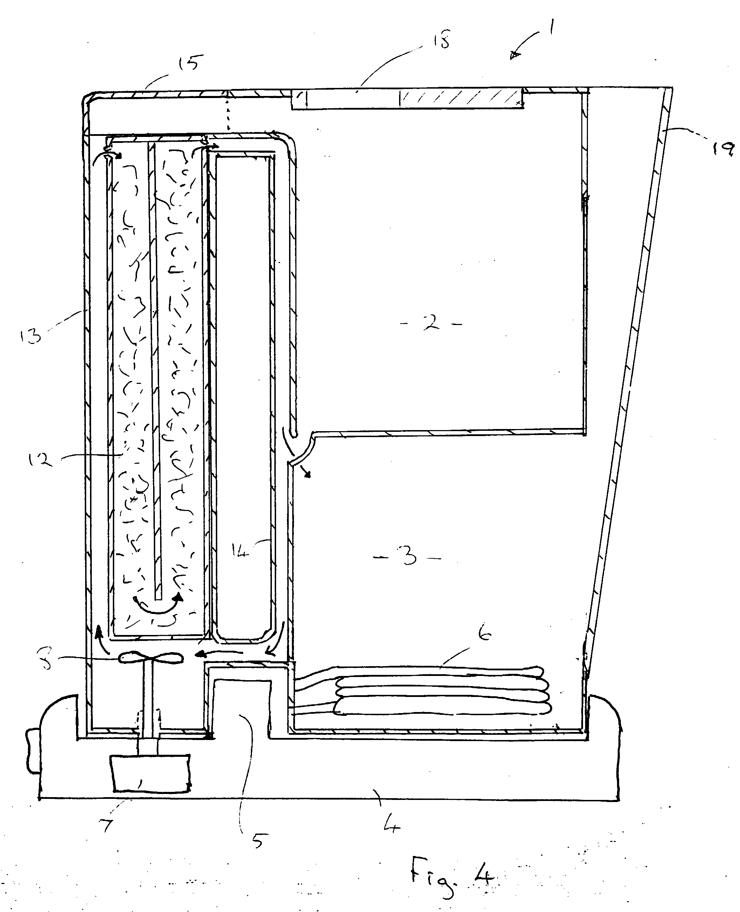

In Figure 4 the geometry of the cold and hot water chambers is changed, with the cold water reservoir 2 being positioned vertically above the hot water chamber 3. The filter unit 12 is provided in the kettle handle 13, where it is well isolated and thermally insulated from the high temperatures that can prevail in the hot water chamber 3. As with the embodiments of Figures 2 and 3, a dedicated fill hole 18 is provided in the kettle lid. In the kettle design of Figure 4, however, the pouring spout 19 must extend from the a position low down the kettle so as to discharge water directly from the hot water chamber 3 on pouring.

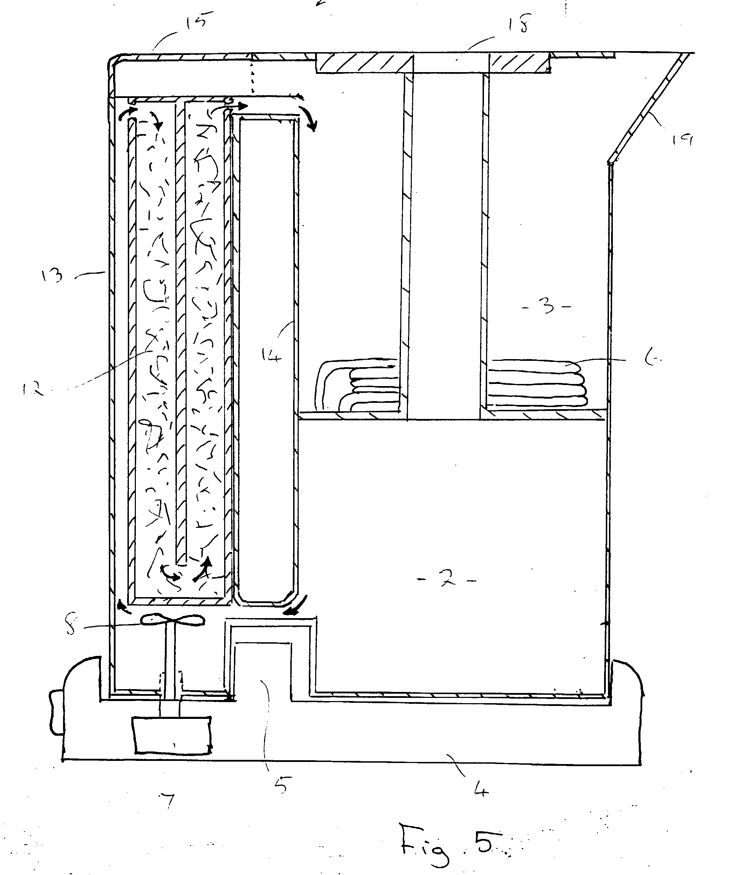

Figure 5 illustrates a reversal of the relative positions of the hot and cold water chambers over that of Figure 4. The fill hole 18 must be connected via a pipe passing through the hot water chamber to the cold water chamber, but this additional complication in the construction of the kettle is countered by the fact that the spout 19 can be a conventional spout at the top edge of the kettle.

## Claims

1. A filter kettle comprising a cold water reservoir (2) and a hot water chamber (3) that is provided with an electric heating element (6); means for filling the cold water reservoir with cold water; a filter element (12); and pump means (8) for pumping on demand cold water from the cold water reservoir (2) through the filter element (12) into the hot water chamber (3); wherein the filter element (12) is located within or adjacent to a handle (13) of the kettle, parallel to a rear outside wall (14) of the kettle.

2. A filter kettle according to claim 1, wherein the filter element (12) is housed within the handle (13) of the kettle, with access being available through an access opening in the top of the handle.

3. A filter kettle according to claim 2, wherein the access opening in the handle (13) is provided with a removable cover (15), and the filter element (12) is spring biased so that on opening of the access cover, the filter element (12) is caused to protrude above the level of the access opening, for ease of removal.

4. A filter kettle according to claim 1, wherein the cold water reservoir (2) is provided at the rear of the kettle adjacent the rear outside wall (14) of the kettle, the hot water chamber (3) is provided at the side of the kettle remote from the handle (13) and rear outside wall (14) and is separated from the cold water reservoir (2) by a vertical partition (20) within the kettle; and the filter element is located in the cold water reservoir immediately adjacent the rear outside wall (14).

5. A filter kettle according to any preceding claim, wherein the filter element (12) is provided with inlet and outlet orifices both located in an upper portion of the filter element (12); and an internal partition within the filter element causes water pumped therethrough to follow a generally U -shaped path.

6. A filter kettle according to any preceding claim, wherein the kettle is a cordless kettle adapted to stand on a power base (4) in order to provide an electrical connection to the heating element (6) of the kettle; and the pump means (8) is an impeller blade and an impeller shaft within the kettle body, but powered by an electrical motor (7) within the power base (4).

7. A filter kettle according to claim 6, wherein the drive connection from the pump motor (7) to the impeller shaft is a spline drive connection that is established when the kettle is placed on the power base (4).
